# EUROPÄISCHE PATENTANMELDUNG

(11) **EP 2 716 930 A1**
(43) Veröffentlichungstag der Anmeldung: **09.04.2014**
(21) Anmeldenummer: 12187059.6
(22) Anmeldetag: 03.10.2012
(51) Int. Cl.: F16D 65/12

(54) **Hybridbremse**

(71) Anmelder: Georg Fischer Kokillenguss GmbH, 3130 Herzogenburg (AT); Buderus Guss GmbH, 35236 Breidenbach (DE)
(72) Erfinder: Weid, Dirk, 8200 Schaffhausen (CH)
(74) Vertreter: Fenner, Seraina

(57) **Zusammenfassung**

Bremsscheibe (1) für eine Scheibenbremse eines Fahrzeugs insbesondere eines Kraftfahrzeugs beinhaltend einen Topf (3) vorzugsweise aus einer Aluminiumlegierung oder einem Kunststoff, wobei der Topf (3) radial angeordnete Aufnahmen (6) aufweist und eine Reibscheibe (2) vorzugsweise aus einer Gusseisenlegierung, wobei die Reibscheibe (2) vorzugsweise Verbindungsrippen (4) und Kühlrippen (7) aufweist, die einstückig an der Reibscheibe (2) angeformt sind, wobei an den Verbindungsrippen (4) oder an der Reibscheibe (2) Verbindungselemente (5) angeordnet sind, wobei die Verbindungselemente (5) die Form einer Kugel, eines Kugelabschnittes oder eines Zylinders dessen Achse tangential zur Bremsscheibe (1) verläuft aufweisen, und wobei die Verbindungselemente (5) in den korrespondierenden Aufnahmen (6) des Topfes (3) formschlüssig angeordnet sind.

## Beschreibung

Die Erfindung betrifft eine Bremsscheibe für eine Scheibenbremse eines Fahrzeugs insbesondere eines Kraftfahrzeugs beinhaltend einen Topf vorzugsweise aus einer Aluminiumlegierung oder einem Kunststoff wobei der Topf radial angeordnete Aufnahmen aufweist und eine Reibscheibe vorzugsweise aus einer Gusseisenlegierung, wobei die Reibscheibe vorzugsweise Verbindungsrippen und Kühlrippen aufweist, die einstückig an der Reibscheibe angeformt sind, wobei an den Verbindungsrippen (4) oder an der Reibscheibe (2) Verbindungselemente (5) angeordnet sind.

Im heutigen Fahrzeugbau ist ein wesentlicher Punkt die Gewichteinsparung, weshalb es bereits Stand der Technik ist, dass eine Bremsscheibe mehrere Materialien beinhaltet. In der Regel ist die Reibscheibe aus Gusseisen hergestellt, welches die Wärme gut ableitet und thermisch beständig ist, insbesondere gegenüber Spannungen oder Rissbildungen.

Um die Masse der Bremsscheibe möglichst gering zu halten, empfiehlt es sich, den Topf der Bremsscheibe aus einer leichten Legierung vorzugsweise einer Aluminiumlegierung herzustellen.

Vorteilhaft ist es, wenn die Reibscheibe und der Topf miteinander vergossen werden. Aus dem Stand der Technik sind unterschiedliche Verbindungsarten der Reibscheibe mit dem Topf bekannt. Wichtig bei solchen Verbindungen ist die Gewährleistung einer guten Übertragung des Bremsmoments zwischen der Reibscheibe und dem Topf. Ebenso wichtig ist es die thermischen Probleme in der sich im Betrieb befindenden Bremsscheibe, welche sich durch das Bremsen und somit durch die Erwärmung der Bremsscheibe ergeben, zu beherrschen. Diese Schwierigkeiten sind einerseits auf die unterschiedlichen Materialien zurückzuführen wie auch andererseits auf die Erwärmung der Reibscheibe, die stärker ist als die des Topfes. Das kann dazu führen, dass sich die Reibscheibe in unerwünschter Weise schirmartig verformt, was einen ungleichmässigen Verschleiss der Bremsfläche und der Bremsbeläge mit sich bringt.

Die EP 1 972 823 B1 offenbart eine derartige Bremsscheibe, die ein topfartiges Tragteil beinhaltet sowie eine Reibscheibe, die sich radial erstreckende

Verbindungsstege aufweist, welche die Verbindung mit dem Tragteil gewährleisten indem die radialen Enden der Verbindungsstege formschlüssig vom Tragteil umgeben sind, wobei die Verbindungsstege durch die Seitenwand des Tragteils hindurchtreten.

Nachteilig an dieser Ausführungsform ist die konische Verbindung der Verbindungsstege im Tragteil. Durch die Erwärmung der Bremsscheibe bewegen sich die Stege radial nach aussen, wodurch die konische Aufnahme zwischen Tragteil und Steg ein grösseres Spiel erhält, wodurch die Stege nicht mehr optimal geführt sind.

Die EP 2 275 702 A2 offenbart eine Bremsscheibe, die eine Trägerglocke beinhaltet, welche eine Vielzahl von radialen Aufnahmen aufweist, in die die Vorsprünge der Verbindungselemente der Bremsfläche greifen um die Trägerglocke mit der Bremsfläche zu verbinden. Die Verbindungselemente, welche in radialen Aufnahmen der Trägerglocke greifen, sind von den Wänden der Aufnahme derart umgeben, dass die Verbindungselemente axial und tangential fixiert und in radialer Richtung translatorisch frei sind.

Es ist Aufgabe der Erfindung eine Bremsscheibe vorzuschlagen, bei welcher eine Deformation der Reibscheibe verhindert wird insbesondere eine schirmartige Deformation.

Diese Aufgabe wird erfindungsgemäss dadurch gelöst, dass die Verbindungselemente die Form einer Kugel, eines Kugelabschnittes oder eines Zylinders, dessen Achse tangential zur Bremsscheibe verläuft, aufweisen, wobei die Verbindungselemente in den korrespondierenden Aufnahmen des Topfes formschlüssig angeordnet sind. Dadurch wird eine starre Anbindung der Reibscheibe an den Topf vermieden und gewährt der Reibscheibe die Möglichkeit der Ausdehnung in radialer Richtung, ohne dass sich die Reibscheibe schirmartig verformt.

Durch die Verbindungselemente in Form einer Kugel, eines Kugelabschnitts oder eines Zylinders mit einem Achsenverlauf tangential zur Bremsscheibe kann keine Momentenübertragung der Reibscheibe auf den Topf oder umgekehrt stattfinden, da an dem Verbindungselement, welches durch seine Form gelenkig in der Aufnahme des Topfes angeordnet ist, kein Moment entstehen kann. Dadurch wird eine schirmartige Verformung der Reibscheibe verhindert. Durch die Erwärmung der Reibscheibe ist diese versucht sich auszudehnen. Da die Reibscheibe jedoch gelenkig über die Verbindungselemente mit dem Topf verbunden ist, verformt sich zwar der Topf, aber diese Verformung wird aufgrund der gelenkigen Verbindung nicht an die Reibscheibe übertragen. Somit wird die Reibscheibe nicht schirmartig verformt. Die Reibscheibe dehnt sich dadurch nur radial aus und zieht den Topf mit sich nach aussen, wodurch sich die Topfwand konisch aufweitet. Wie bereits erwähnt, wird diese Verformung der Topfwand durch die gelenkige Verbindung der Verbindungselemente in den Aufnahmen nicht in der Art auf die Reibscheibe übertragen, dass sie sich schirmartig verformt, sondern nur in der Art, dass sich die Reibscheibe radial ausdehnt.

Vorzugsweise weisen die Verbindungselemente die Form einer Kugel auf, wobei auch Kugelabschnitte und Zylinder, mit einem Achsverlauf tangential zur Bremsscheibe, eingesetzt werden können. Wichtig ist, dass die Gelenkigkeit zwischen dem Topf und der Reibscheibe gegeben ist, bzw. dass kein Moment am Verbindungselement entsteht.

Die Verbindungselemente, welche in der nach innen gerichteten Verlängerung der Verbindungsrippen Richtung Zentrum der Bremsscheibe oder direkt an der Reibscheibe angeordnet sind, ragen über den inneren Radius der Reibscheibe hinaus und werden von den korrespondierenden Aufnahmen im Topf formschlüssig aufgenommen.

Vorzugsweise werden die Verbindungselemente von der Aufnahme derart umschlossen, dass sie sich radial, axial und tangential relativ zur Aufnahme nicht verschieben können bzw. translatorisch fixiert sind. Der Freiheitsgrad der vorliegenden Verbindung besteht einzig darin, dass sich die Verbindungselement rotatorisch in der Ausnahme des Topfes bewegen kann.

Eine bevorzugte Ausführungsform besteht darin, dass die Kühlrippen und die Verbindungrippen radial ausgerichtet sind. Das heisst, dass sie sich in einer fiktiven Verlängerung vom Zentrum der Bremsscheibe bzw. der Reibscheibe radial gerade in einer Linie nach aussen hin erstrecken.

Alternativ besteht die Möglichkeit, dass die Kühlrippen wie auch die Verbindungsrippen gekrümmt verlaufen, wodurch die Innenbelüftung der Bremsscheibe optimiert wird.

Eine bevorzugte Ausführungsform besteht darin, dass die Verbindungsrippe und das Verbindungselement einstückig ausgebildet sind. Das heisst somit auch, dass die Reibscheibe mit dem Verbindungselement sowie den Verbindungsrippen und den Kühlrippen einstückig ausgebildet sind bzw. aus einem Stück hergestellt sind, vorzugsweise durch Giessen.

Als alternative Ausführungsform besteht die Möglichkeit das Verbindungselement als ein separates Teil auszubilden, welches beispielsweise mittels Gewinde am Verbindungselement befestigt wird, wobei auch andere Befestigungsarten vorstellbar sind.

Ausführungsbeispiele der Erfindung werden anhand der Figuren beschrieben, wobei sich die Erfindung nicht nur auf die Ausführungsbeispiele beschränken. Es zeigen:
- Fig. 1: einen Teilschnitt durch eine erfindungsgemässe Bremsscheibe,
- Fig. 2: ein Halbschnitt durch eine erfindungsgemässe Bremsscheibe,
- Fig. 3: einen Teilschnitt eines zylindrischen Verbindungselements und dessen Seitenansicht,
- Fig. 4: einen Teilschnitt durch eine gekrümmte Verbindungsrippe mit angeordnetem Verbindungselement,
- Fig. 5: einen Teilschnitt eines Verbindungselements mit eingelegtem Gleitmaterial in der Aufnahme,
- Fig. 6: div. Ausführungsformen von Verbindungselementen und deren Aufnahmen,
- Fig. 7: ein kugelförmiges Verbindungselement mit Nut,
- Fig. 8: einen Teilschnitt und eine perspektivische Ansicht eines kugelförmigen Verbindungselements mit einer in einer Rille angeordneten Verzahnung und
- Fig. 9: einen Teilschnitt eines Verbindungselements, welches als separates Bauteil ausgebildet ist und
- Fig. 10: einen Teilschnitt und dessen Seitenansicht eines Verbindungselements, welches an der Reibscheibe angeordnet ist.

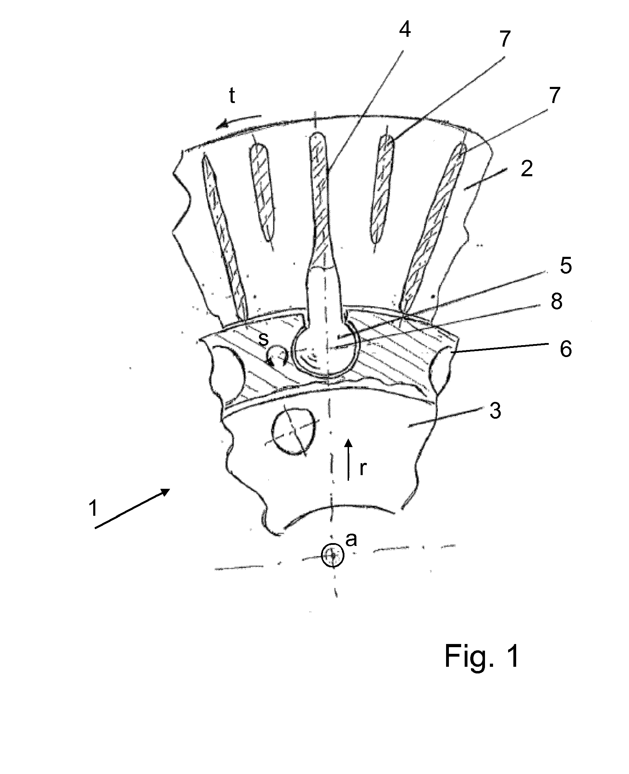

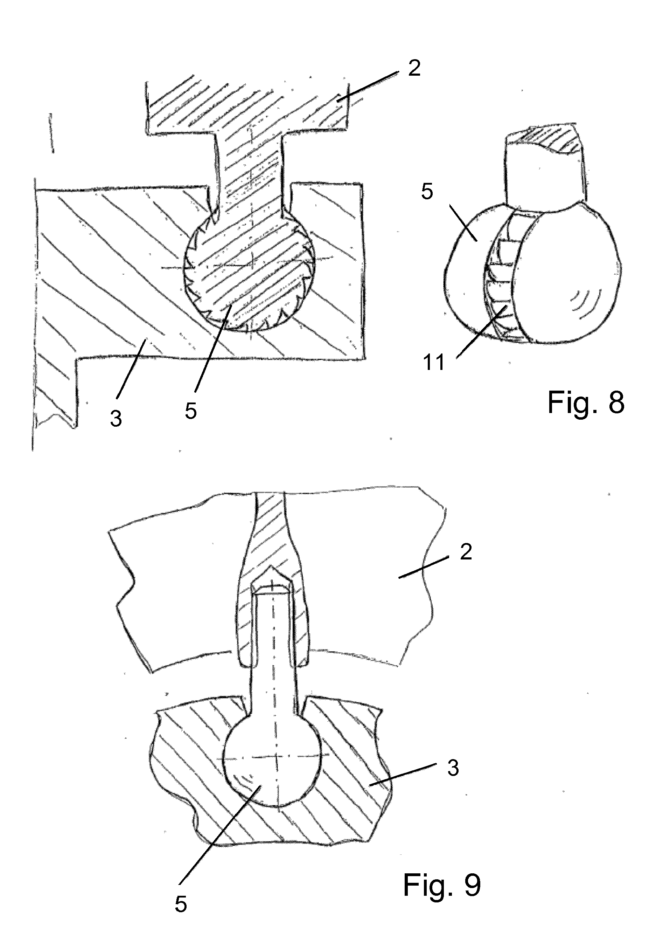

Fig. 1 zeigt einen Teilschnitt einer erfindungsgemässen Bremsscheibe 1, welche aus einem Topf 3 der vorzugsweise aus einer Aluminiumlegierung oder einem Kunststoff wie beispielsweise PEEK hergestellt ist und einer Reibscheibe 2 vorzugsweise aus einer Gusseisenlegierung. Die Reibscheibe 2 weist vorzugsweise zwei sich gegenüberliegende Reibringe auf, die über Kühlrippen 7 miteinander verbunden sind. In der in Fig. 1 abgebildeten Ausführungsform der Bremsscheibe 1 erstrecken sich die Kühlrippen 7 radial in einer geraden Linie, wobei sie unterschiedliche Längen aufweisen. Die Kühlrippen 7 können auch gleich lang ausgebildet sein. Die Kühlrippen 7 bilden durch ihre gegenseitige Beabstandung voneinander Kühlkanäle, welche der Innenbelüftung der Reibscheibe 2 dienen. Zwischen den Kühlrippen 7, sind in regelmässigen Abständen Verbindungsrippen 4 angeordnet, vorzugsweise auch in regelmässigen Abständen zu den Kühlrippen 7. Eine Reibscheibe 2 weist mindestens vier Verbindungsrippen 4 auf, welche regelmässig über den Umfang verteilt sind. Vorteilhaft ist es, wenn sich die Verbindungsrippe 4 in Richtung Zentrum der Reibscheibe 2 verbreitert. Am Ende der Verbindungsrippe 4 in Richtung Zentrum der Reibscheibe 2 ist ein Verbindungselement 5 angeordnet. In Fig. 1 ist als Ausführungsbeispiel das Verbindungselement 5 in Form einer Kugel abgebildet, wobei sich auch andere Formen eignen. Zudem ist das Verbindungselement 5 und die Verbindungsrippe 4 in der in Fig. 1 dargestellten Ausführungsform einstückig ausgebildet. Die Reibscheibe 2 mit den Verbindungsrippen 4 und den Verbindungselementen 5 ist als Gussteil ausgeführt. Alternativ besteht die Möglichkeit das Verbindungselement 5 als separates Teil herzustellen und beispielsweise durch eine Gewindeverbindung mit der Verbindungsrippe 4 zu verschrauben wie in Fig. 9 dargestellt. Es sind auch andere Verbindungsarten denkbar um das Verbindungselement 5 an der Verbindungsrippe 4 anzubringen. Das Verbindungselement 5 wird formschlüssig von der Aufnahme 6 umfasst, welche im Topf 3 angeordnet ist. Das Verbindungselement 5 kann sich weder in axialer a, radialer r noch in tangentialer t Richtung bewegen und ist somit translatorisch fixiert. Das Verbindungselement 5 hat einzig die Möglichkeit sich rotatorisch zu bewegen. Dadurch, dass die Reibscheibe 2 mit dem Topf 3 gelenkig über die Verbindungselemente 5 und die Aufnahme 6 verbunden ist, kann kein Moment entstehen, welches eine schirmartige Verformung der Reibscheibe 2 hervorruft.

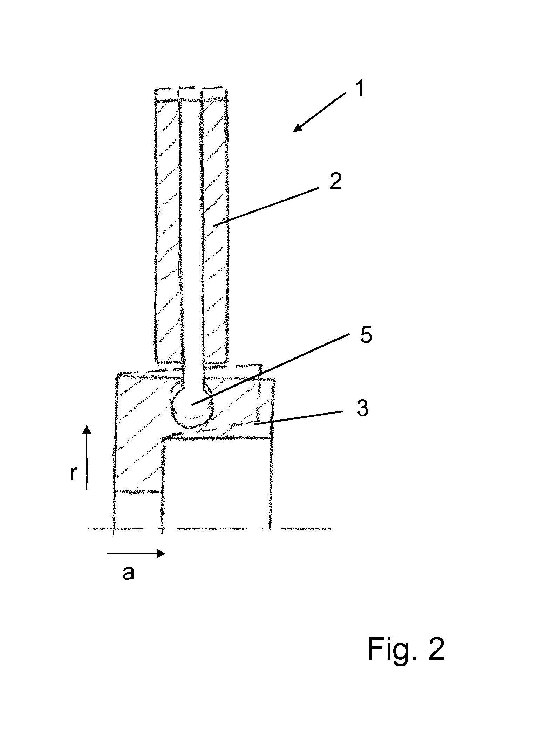

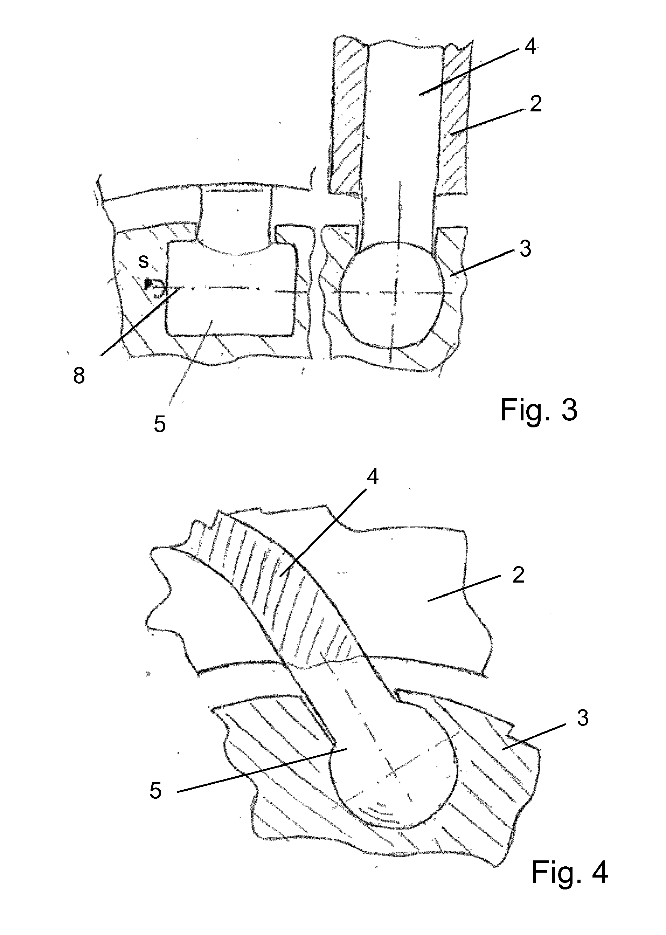

In Fig. 2 ist die Bremsscheibe 1 im Teilschnitt dargestellt. Die gestrichelten Linien zeigen die Verformung der Bremsscheibe 1 bzw. der Reibscheibe 2 und des Topfs 3 bei der Erwärmung der Bremsscheibe 1. Als erstes erwärmt sich die Reibscheibe 2, worauf sie sich radial r vergrössert bzw. ausdehnt und dadurch den Topf 3 mit sich zieht und diesen verformt. Durch die gelenkige Verbindung mittels Verbindungselement 5 und korrespondierender Aufnahme 6 wird jedoch diese Verformung nicht an die Reibscheibe 2 übertragen, da kein Moment übertragen werden kann. Bei einer starren Verbindung zwischen Reibscheibe 2 und Topf 3 wie aus dem Stand der Technik bekannt, würde die Verformung des Topfs 3 durch ein entstehendes Moment auf die Reibscheibe 2 übertragen werden und würde zur bekannten schirmartigen Verformung der Reibscheibe 2 führen. Durch die gelenkige Verbindung der vorliegenden Erfindung kann dem aber Einhalt geboten werden. Alternativ kann als Verbindungselement 5 anstelle der Kugel auch ein Zylinder eingesetzt werden. Fig. 3 zeigt eine solche Ausführungsform, wobei auch bei dieser Variante das Verbindungselement 5 formschlüssig von der korrespondierenden Aufnahme 6 umfasst wird. Es besteht somit hier für das Verbindungselement 5 nur die Möglichkeit der rotativen Bewegung s um die Achse 8, welche tangential zum Umfang der Bremsscheibe 1 verläuft.

In Fig. 4 ist das Verbindungselement 5 wiederum als Kugel dargestellt, wobei auch hier alternative Formen denkbar sind. Die Verbindungsrippe 4 erstreckt sich in diesem Ausführungsbeispiel nicht geradlinig sondern weist eine Krümmung auf. Dadurch, dass die Verbindungsrippen 4 vorzugsweise regelmässig zueinander und zu den Kühlrippen 7 angeordnet sind, sind auch die Kühlrippen 7 entsprechend gekrümmt. Die Krümmung dient der Optimierung der Kühlung der Bremsscheibe 1 Es besteht auch die Möglichkeit der Kombination von gekrümmten Verbindungsrippen 4 mit gerade radial erstreckenden Kühlrippen 7 wie auch umgekehrt.

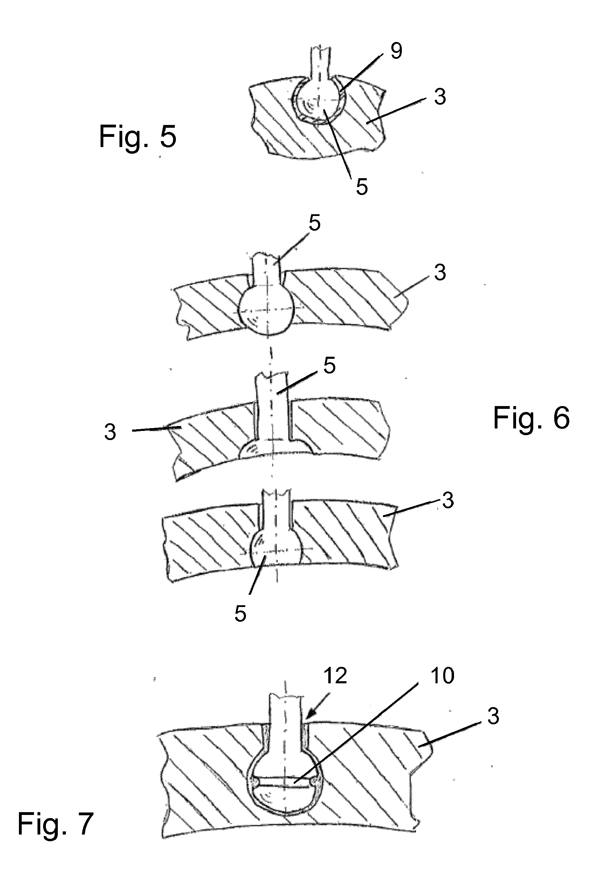

Fig. 5 zeigt ein Verbindungselement 5 in Form einer Kugel, wobei sich auch andere Formen eignen. Die Aufnahme 6 ist bei dieser Ausführungsform mit einem Gleitmaterial 9 ausgekleidet um die Reibung zu minimieren. Vorzugsweise werden dazu Materialien wie PTFE, PEEK, Graphit oder Rotguss verwendet. Eine solche Auskleidung erhöht die Lebensdauer des Verbindungselements 5.

In Fig. 6 werden alternative Formen für das Verbindungselement aufgezeigt. Wobei das Verbindungselement 5 in den dargestellten Ausführungen noch einen weiteren Freiheitsgrad besitzt. In den Ausführungsformen welche in Fig. 6 dargestellt sind, kann sich das Verbindungelement 5 zudem noch in Richtung Zentrum hin bewegen. Dieser zusätzliche Freiheitsgrad ist bereits aus dem Stand der Technik bekannt aber nicht in Verbindung mit einem derart geformten Verbindungselement 5.

Das Verbindungselement 5 kann auch die Form eines Kugelabschnitts aufweisen, entsprechend ist die Aufnahme 6 durchgehend, was die radiale translatorische Beweglichkeit ermöglicht. Die Aufnahme 6 weist auch bei diesen Ausführungsformen die korrespondierende Form des Verbindungselements 5 auf.

Eine weitere mögliche Variante des Verbindungselements 5 besteht darin, dass das Verbindungselement 5 eine Nut 10 aufweist, die als Reservoir für einen Schmierstoff 12 dient, was aus Fig. 7 ersichtlich ist. Vorzugsweise wird Graphit als Schmierstoff 12 eingesetzt, welcher das Verbindungselement 5 umgibt und in der Nut gespeichert wird.

Fig. 8 zeigt ein Verbindungselement 5, welches ebenfalls die Form einer Kugel aufweist, an der entlang des Umfangs eine Rille angeordnet ist mit einer darin befindenden Verzahnung. Die Verzahnung in der Rille 11 soll dazu dienen den Schmutz aus der Aufnahme 6, durch die Relativbewegung des Verbindungselements 5 zur Aufnahme, hinaus zu fördern.

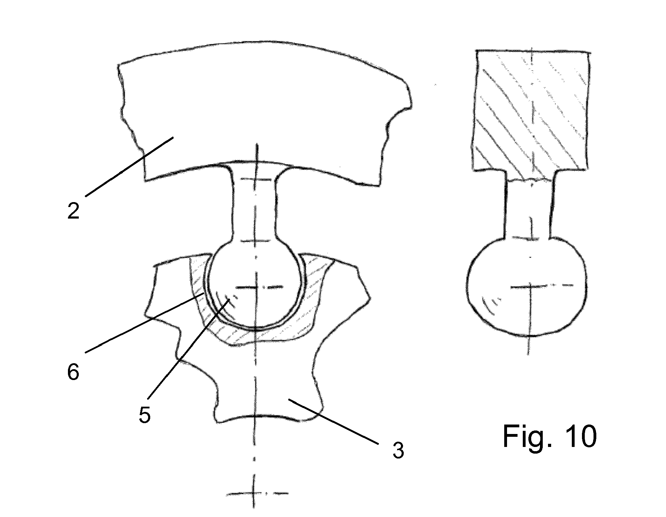

In Fig. 10 ist das Verbindungselement 5 direkt an der Reibscheibe 2 angeordnet. Eine solche Bremsscheibe 1 weist nur eine Reibscheibe 2 auf und benötigt daher keine Kühlrippen 7. Das Verbindungselement 5, welches an der Reibscheibe 2 angeordnet ist, wird ebenfalls formschlüssig von der Aufnahme 6 im Topf 3 umschlossen. Auch diese Ausführungsform ermöglicht dem Verbindungselement 5 eine blosse rotative Bewegungsfreiheit und keine translatorische. Das Verbindungselement 5 und die Reibscheibe 2 kann einstückg ausgebildet sein und beispielsweise durch Giessen hergestellt werden. Es besteht auch bei dieser Variante die Möglichkeit die Verbindungselemente 5 separat auszubilden und sie anschliessend an der Reibscheibe 2 anzubringen, vorzugsweise durch eine Gewindeverbindung.

Die unterschiedlichen Ausführungsformen sind auch individuell miteinander kombinierbar.

### Bezugszeichen liste

- 1: Bremsscheibe
- 2: Reibscheibe
- 3: Topf
- 4: Verbindungsrippe
- 5: Verbindungselement
- 6: Aufnahme
- 7: Kühlrippe
- 8: Achse Verbindungselement, tangential zum Umfang der Bremsscheibe
- 9: Gleitmaterial
- 10: Nut
- 11: Rille mit Verzahnung
- 12: Schmierstoff

- r: radial
- a: axial
- t: tangential
- s: rotative Bewegung

## Patentansprüche

1. Bremsscheibe (1) für eine Scheibenbremse eines Fahrzeugs insbesondere eines Kraftfahrzeugs beinhaltend einen Topf (3) vorzugsweise aus einer Aluminiumlegierung oder einem Kunststoff, wobei der Topf (3) radial angeordnete Aufnahmen (6) aufweist und eine Reibscheibe (2) vorzugsweise aus einer Gusseisenlegierung, wobei die Reibscheibe (2) vorzugsweise Verbindungsrippen (4) und Kühlrippen (7) aufweist, die einstückig an der Reibscheibe (2) angeformt sind, wobei an den Verbindungsrippen (4) oder an der Reibscheibe (2) Verbindungselemente (5) angeordnet sind, **dadurch gekennzeichnet, dass** die Verbindungselemente (5) die Form einer Kugel, eines Kugelabschnittes oder eines Zylinders dessen Achse tangential zur Bremsscheibe (1) verläuft aufweisen, wobei die Verbindungselemente (5) in den korrespondierenden Aufnahmen (6) des Topfes (3) formschlüssig angeordnet sind.

2. Bremsscheibe (1) nach Anspruch 1, **dadurch gekennzeichnet, dass** die Verbindungselemente (5) translatorisch radial, axial und tangential fixiert sind.

3. Bremsscheibe (1) nach einem der Ansprüche 1 oder 2, **dadurch gekennzeichnet, dass** die Verbindungsrippen (4) und die Kühlrippen(7) radial ausgerichtet sind.

4. Bremsscheibe (1) nach einem der Ansprüche 1 oder 2, **dadurch gekennzeichnet, dass** die Verbindungsrippen (4) und die Kühlrippen (7) gekrümmt verlaufen.

5. Bremsscheibe (1) nach Anspruch 1, **dadurch gekennzeichnet, dass** das Verbindungselement (5) und die Verbindungsrippe (4) einstückig ausgebildet ist.

6. Bremsscheibe (1) nach einem der Ansprüche 1 oder 2, **dadurch gekennzeichnet, dass** die Aufnahme (6) mittels eines Gleitmaterials (9) insbesondere PTFE, Graphit oder Rotguss ausgekleidet ist.

7. Bremsscheibe (1) nach einem der vorangehenden Ansprüche, **dadurch gekennzeichnet, dass** das Verbindungselement (5) eine Nut (10) als Reservoir für einen Schmierstoff aufweist.

8. Bremsscheibe (1) nach einem der vorangehenden Ansprüche, **dadurch gekennzeichnet, dass** das Verbindungselement (5) eine Rille mit Verzahnung (11) zur Herausförderung des Schmutzes aufweist.
